# DEMANDE DE BREVET EUROPEEN

(11) **EP 1 398 908 A1**
(43) Date de publication de la demande: **17.03.2004**
(21) Numéro de dépôt: 03292094.4
(22) Date de dépôt: 26.08.2003
(51) Int. Cl.: H04L 12/24, H04L 12/14

(54) **Procédé et dispositif d'adaptation automatisée de SLA et/ou de services dans un réseau de communications**

(30) Priorité: 12.09.2002 FR 0211306
(71) Demandeur: ALCATEL, 75008 Paris (FR)
(72) Inventeur: Marilly, Emmanuel, 92160 Antony (FR); Betge-Brezetz, Stéphane, 75015 Paris (FR); Martinot, Olivier, 91210 Draveil (FR); Delegue, Gérard, 94230 Cachan (FR)
(74) Mandataire: Chaffraix, Sylvain

(57) **Abrégé**

Un dispositif (2), dédié au traitement de données de gestion d'un réseau de communications (N), représentatives de l'utilisation des ressources et/ou des services au sein du réseau, comprend des moyens de traitement (5) agencés pour déterminer, à partir des données de gestion, des données primaires représentatives d'un état d'utilisation du réseau par au moins un utilisateur ayant passé un SLA avec l'opérateur du réseau, puis pour comparer cet état d'utilisation à des données auxiliaires représentatives du SLA, de manière à déterminer une action à entreprendre en cas de détection d'au moins une différence entre les données primaires et les données auxiliaires

## Description

L'invention concerne le domaine des réseaux de communications, et plus particulièrement celui de la gestion des ressources et services offerts par un réseau de communications.

De nombreux utilisateurs de réseaux de communications souhaitant disposer de niveaux de service définis, les opérateurs de ces réseaux mettent à leur disposition un certain nombre d'accords de niveau de service (ou SLA pour « Service Level Agreement »). Or, il arrive fréquemment que l'opérateur d'un réseau constate, par l'analyse des mesures effectuées sur les paramètres de fonctionnement et d'utilisation de son réseau, des différences entre les SLAs souhaités par ses clients, les SLAs acceptés par ses clients et l'utilisation réelle des ressources et services par lesdits clients. Par conséquent, certains SLAs ne correspondent pas aux réels besoins des clients soit du fait que ces clients ont initialement surestimés ou sous-estimés leurs besoins, soit du fait que les offres de services de l'opérateur, associées aux SLAs, ne sont pas adaptées aux besoins de certains de ses clients.

Pour tenter de remédier à cet inconvénient, certaines sociétés, telles que PROVISO, QUALLABY ou INFOVISTA, ont proposé de détecter les violations de SLA résultant des clients ou de l'opérateur, et d'effectuer des analyses relativement simples pour délivrer des alarmes lorsque des données mesurées variaient dans un intervalle choisi, comme par exemple d'une semaine à l'autre ou d'un jour à l'autre. Mais, une telle solution ne permet pas d'adapter de façon automatisée les offres de service et/ou les SLAs aux besoins réels des utilisateurs des réseaux de communications.

L'invention a donc pour but de remédier à cet inconvénient.

Elle propose à cet effet un dispositif, dédié au traitement de données de gestion d'un réseau de communications, représentatives de l'utilisation des ressources et/ou des services au sein de ce réseau, et comprenant des moyens de traitement capables de déterminer à partir de ces données de gestion des données primaires représentatives d'un état d'utilisation du réseau par au moins un utilisateur ayant passé un SLA avec l'opérateur du réseau, puis de comparer cet état d'utilisation à des données auxiliaires représentatives du SLA considéré, de manière à déterminer une action à entreprendre en cas de détection d'au moins une différence entre les données primaires et les données auxiliaires.

On entend ici par « données de gestion », des données représentatives de certaines au moins des performances mesurées du réseau, telles que, par exemple, les données actuelles et anciennes d'utilisation de ses ressources et/ou de ses services.

Préférentiellement, les données primaires, qui définissent l'état d'utilisation, sont représentatives de l'utilisation d'au moins un service du réseau et/ou de certaines de ses ressources.

Le dispositif selon l'invention pourra comporter de nombreuses caractéristiques complémentaires qui pourront être prises séparément et/ou en combinaison, et en particulier ses moyens de traitement peuvent être agencés de manière à :
- déterminer l'action à entreprendre parmi une proposition de modification du SLA passé entre l'utilisateur et l'opérateur et/ou une proposition de modification des services (ou offres de service) et/ou des ressources du réseau,
- adapter certaines au moins des propositions de modification de SLA en fonction de la (ou des) différence(s) détectée(s),
- adapter certaines au moins des propositions de modification des services (ou offres de service) et/ou des ressources du réseau en fonction d'une ou plusieurs propositions de modification de SLA, et éventuellement de données tertiaires, comme par exemple des données provenant d'études de marché,
- déterminer certains au moins des états d'utilisation sous la forme de profils d'utilisation associés à des intervalles temporels choisis (par exemple une semaine ou un mois), à partir des données de gestion correspondant à cet intervalle temporel,
- déterminer une action à entreprendre à partir de plusieurs états d'utilisation associés à des utilisateurs différents ou d'un état d'utilisation associé à un groupe d'utilisateurs,
- instaurer automatiquement une modification de SLA lorsqu'au moins une condition est satisfaite. Une telle condition peut être, par exemple, « l'augmentation du tarif appliqué à l'utilisateur est inférieure à la pénalité représentative de la violation du SLA par cet utilisateur »,
- effectuer leurs déterminations de façon périodique.

L'invention concerne également un dispositif de gestion d'un réseau de communications, comme par exemple un serveur de type NMS (pour « Network Management System »), équipé d'un dispositif de traitement du type de celui présenté ci-avant.

L'invention porte également sur un procédé, dédié au traitement de données de gestion d'un réseau de communications, représentatives de l'utilisation des ressources et/ou des services au sein dudit réseau, et consistant à déterminer, à partir de ces données de gestion, des données primaires représentatives d'un état d'utilisation du réseau par au moins un utilisateur ayant passé un SLA avec l'opérateur du réseau, puis à comparer cet état d'utilisation à des données auxiliaires représentatives du SLA, de manière à déterminer une action à entreprendre en cas de détection d'au moins une différence entre les données primaires et les données auxiliaires.

Le procédé selon l'invention pourra comporter de nombreuses caractéristiques complémentaires qui pourront être prises séparément et/ou en combinaison, et en particulier :
- les données primaires, qui définissent l'état d'utilisation, sont préférentiellement représentatives de l'utilisation d'au moins un service du réseau et/ou de certaines de ses ressources,
- l'action à entreprendre peut être déterminée parmi une proposition de modification du SLA passé entre l'utilisateur et l'opérateur et/ou une proposition de modification des services (ou offres de service) et/ou des ressources du réseau,
- certaines au moins des propositions de modification de SLA peuvent être adaptées en fonction de la (ou des) différence(s) détectée(s),
- certaines au moins des propositions de modification des services (ou offres de service) et/ou ressources du réseau peuvent être adaptées en fonction d'une ou plusieurs propositions de modification de SLA, et éventuellement de données tertiaires, comme par exemple des données provenant d'études de marché,
- certains au moins des états d'utilisation peuvent être déterminés sous la forme de profils d'utilisation associés à des intervalles temporels choisis (par exemple une semaine ou un mois), à partir des données de gestion correspondant à cet intervalle temporel,
- l'action à entreprendre peut être déterminée à partir de plusieurs états d'utilisation associés à des utilisateurs différents ou d'un état d'utilisation associé à un groupe d'utilisateurs,
- on peut instaurer automatiquement une modification de SLA lorsqu'au moins une condition est satisfaite. Une telle condition peut être, par exemple, « l'augmentation du tarif appliqué à l'utilisateur est inférieure à la pénalité représentative de la violation du SLA par cet utilisateur »,
- on peut effectuer les déterminations de façon périodique.

L'invention peut être mise en oeuvre dans tout type de réseau de communications, privé ou public, et en particulier dans les réseaux Internet/IP, ATM, Frame Relay, SDH et WDM.

D'autres caractéristiques et avantages de l'invention apparaîtront à l'examen de la description détaillée ci-après, et des dessins annexés, sur lesquels :
- la figure 1 illustre de façon schématique une partie d'un réseau de communications équipé d'un dispositif de traitement selon l'invention, implanté dans un serveur de gestion du réseau,
- la figure 2 illustre de façon schématique un exemple de représentation graphique d'un SLA passé entre un client disposant de quatre sites raccordés entre eux via un réseau privé virtuel,
- la figure 3 illustre de façon schématique un exemple de représentation graphique des besoins réels du client ayant requis le SLA de la figure 2, et
- la figure 4 illustre de façon schématique un exemple de représentation graphique d'un SLA modifié, adapté aux besoins réels du client ayant requis le SLA de la figure 2.

Les dessins annexés pourront non seulement servir à compléter l'invention, mais aussi contribuer à sa définition, le cas échéant.

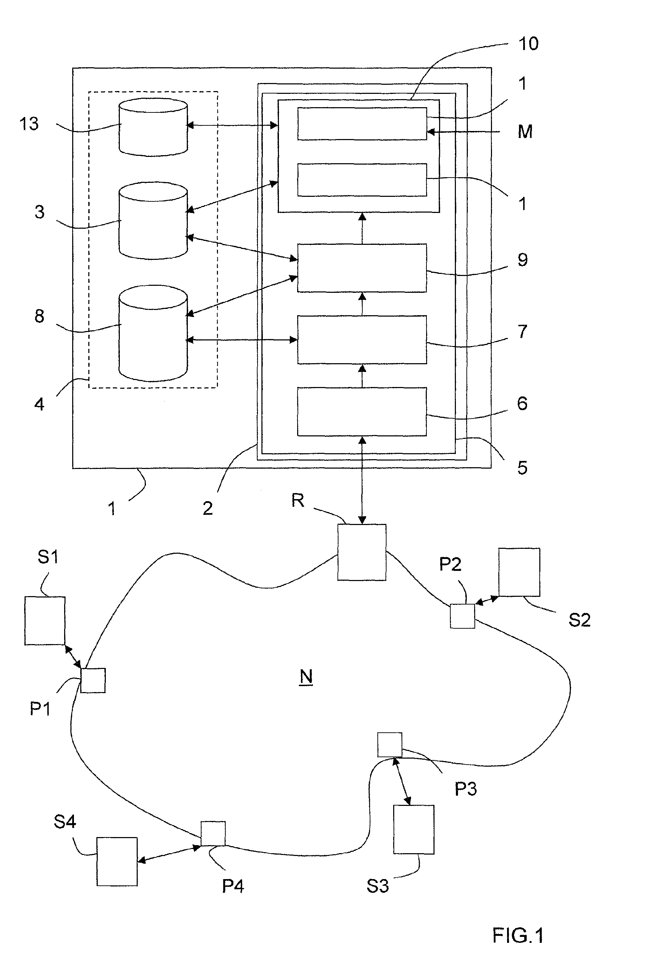

Le dispositif de traitement selon l'invention est destiné à être installé au coeur d'un réseau de communications, du type de celui illustré sur la figure 1, par exemple dans un serveur de gestion du réseau 1, de type NMS (pour « Network Management System »), de manière à disposer des mesures des performances du réseau, et notamment des mesures de l'utilisation de ses ressources et/ou de ses services.

A titre d'exemple non limitatif, on considère dans ce qui suit que le réseau de communications N est le réseau public Internet dans lequel les données sont échangées selon le protocole IP. Mais, il pourrait s'agir d'un réseau privé, de type Intranet, ou de plusieurs réseaux public(s) et/ou privé(s) raccordés les uns aux autres. Par ailleurs, on considère dans ce qui suit que certains au moins des utilisateurs du réseau, ci-après appelés clients, sont liés à l'opérateur dudit réseau par des accords de niveau de service (ou SLA) qui incluent des parties techniques définies par des spécifications de niveau de service (ou SLS).

Un réseau du type de celui illustré sur la figure 1 comporte une multiplicité de routeurs de coeur (ou « core routers ») R, raccordés les uns aux autres ainsi qu'au serveur de gestion NMS 1, directement ou indirectement, et des routeurs périphériques (ou « edge routers ») Pi, également appelés points de présence (ou POP pour « Point Of Presence »), chacun raccordés, d'une part, à l'un des routeurs de coeur, et d'autre part, à des terminaux et/ou serveurs Sj, appartenant notamment à des clients du réseau.

Le serveur de gestion 1 est alimenté en permanence en données de gestion représentatives de mesures de performances du réseau, de manière à délivrer au gestionnaire du réseau, via une interface graphique de type GUI, des informations sur le fonctionnement de son réseau.

Le dispositif de traitement 2, selon l'invention, est destiné à confronter certaines au moins des données de gestion provenant du réseau, notamment celles portant sur l'utilisation des ressources et/ou des services offerts par ledit réseau, à des données, dites auxiliaires, représentatives des SLAs qui ont été passés entre l'opérateur et ses clients.

Parmi les données de gestion utiles au traitement, on peut notamment citer les bandes passantes utilisées, les limitations (non destructives) de trafic (ou « trafic shaped »), les limitations (destructives) de trafic (ou « trafic dropped »), les délais, la gigue, les taux de perte des paquets (par exemple sur IP).

Les données auxiliaires sont préférentiellement stockées dans une première partie 3 d'une base de données 4 du serveur de gestion NMS 1, en correspondance du ou des clients correspondant. Mais, elles pourraient être stockées dans un autre équipement du réseau accessible au serveur de gestion NMS 1.

Pour effectuer cette confrontation, le dispositif de traitement 2 comporte un module de traitement 5 comprenant, tout d'abord, un module de collection 6 chargé de récupérer les données de gestion du réseau nécessaires au traitement (mentionnées ci-avant). Un tel module de collection 6 peut être, par exemple, constitué par un produit commercialisé par les sociétés PROVISO, QUALLABY ou INFOVISTA.

Le module de traitement 5 comprend également un module d'extraction 7, alimenté en données de gestion par le module de collection 6 et chargé de déterminer à partir de ces données de gestion des données, dites primaires, représentatives d'un état d'utilisation du réseau par au moins un utilisateur ayant passé un SLA avec l'opérateur du réseau.

Préférentiellement, l'état d'utilisation se présente sous la forme d'un profil d'utilisation de service(s) (ou SUP pour « Service Usage Profile »). Un tel SUP peut être constitué d'un jeu de données ou d'une ligne de base invariante, constitué(e) de données primaires qui identifient et caractérisent l'utilisation qu'un client ou un groupe de clients fait réellement du réseau, et plus précisément de l'un au moins de ses services ou SLAs. Ces SUPs (ou profils d'utilisation) peuvent être obtenus par une analyse (par exemple statistique ou de corrélation) des mesures qui viennent d'être effectuées dans le réseau, ainsi qu'éventuellement des anciennes mesures et/ou anciens SUPs (historique) afin de prendre en compte, par exemple, l'évolution de l'utilisation et/ou l'invariance d'un profil. Ces anciennes mesures, tout comme les profils d'utilisateurs (ou SUPs) déterminés par le module d'extraction 7, sont de préférence stockées dans une deuxième partie 8 de la base de données 4, en correspondance d'un marquage temporel et du ou des clients correspondant.

Les profils d'utilisateur (ou SUPs) sont donc des modèles qui permettent d'étudier et d'analyser le comportement d'un client ou d'un groupe de clients, et notamment de répondre aux questions comportementales « quoi », « lequel », « quand » et « comment ». Ils peuvent être également utilisés pour effectuer des planifications de modification du réseau ainsi que pour mieux cibler et/ou mieux analyser des études de marché.

Le module de traitement 5 comprend également un module de comparaison 9, alimenté en données primaires définissant les profils d'utilisateur (ou SUPs), par le module d'extraction 7 et/ou la deuxième partie 8 de la base de données 4, et chargé de comparer les données primaires de chaque SUP, reçues ou extraites de la base de données 4, aux données auxiliaires définissant le SLA qui lui correspond et qui se trouvent stockées dans la première partie 3 de la base de données 4. La comparaison peut s'effectuer, par exemple, à l'aide de techniques statistiques ou de corrélation.

Si le résultat de la comparaison montre que le SUP analysé correspond sensiblement au SLA extrait, alors le module de comparaison 9 le signifie au module de traitement 5 et le traitement du SUP prend fin. On peut alors procéder à l'extraction d'un nouveau profil. En revanche, si le résultat de la comparaison montre que le SUP analysé ne correspond pas au SLA extrait, alors le module de comparaison 9 le signale à un module d'adaptation 10 du module de traitement 5. Plus précisément, le module de comparaison 9 transmet préférentiellement au module d'adaptation 10 l'identifiant du client ainsi que le SUP déterminé et/ou les données représentatives des différences entre ledit SUP et le SLA correspondant.

Muni de ces informations, le module d'adaptation 10 peut alors déterminer l'action à entreprendre pour remédier à la (ou les) différences détectées entre les données primaires et les données auxiliaires. Il dispose pour ce faire de deux sous-modules. Un premier sous-module 11 est chargé d'adapter les SLAs, tandis qu'un second sous-module 12 est chargé d'adapter les offres de service. Dans un cas comme dans l'autre, l'adaptation est destinée à satisfaire au mieux aux besoins réels de l'utilisateur ou du groupe d'utilisateurs, déterminés par le module d'extraction 7 et définis par le profil d'utilisateur(s) ou SUP.

Préférentiellement, le module d'adaptation 10 charge le premier sous-module 11 d'élaborer une proposition d'adaptation de SLA lorsque la différence détectée peut être prise en compte par les offres de service de l'opérateur et/ou lorsque le nombre de différences détectées est inférieur à un seuil, par exemple égal à deux ou trois. Les données définissant les offres de service de l'opérateur sont de préférence stockées dans une troisième partie 13 de la base de données 4, accessible au module d'adaptation 10.

La proposition d'adaptation du SLA peut consister, par exemple, à modifier la bande passante d'une ou plusieurs liaisons entre points de présence (Pi) d'un réseau virtuel (IP-VPN) conçu pour le client, ou à changer le niveau d'un service (de « l'or » à « l'argent », ou inversement). Le SLA étant constitué de plusieurs autres éléments, on peut également envisager de proposer une modification des délais et/ou de la gigue et/ou des pertes, notamment, mais aussi une modification du temps d'indisponibilité du réseau en cas de panne et/ou des pénalités et/ou des garanties et/ou des sécurités et/ou du mode d'information du client, notamment.

Selon la configuration du dispositif de traitement 2, la proposition d'adaptation du SLA peut être soit imposée automatiquement, soit présentée au client. L'adaptation automatique peut par exemple être décidée lorsqu'au moins une condition est satisfaite. A titre d'exemple illustratif, on peut décider d'adapter automatiquement un SLA lorsque cette adaptation entraîne une augmentation, du tarif appliqué au client, inférieure à la pénalité que devrait payer ce client du fait de la violation de son SLA. On pourrait aussi envisager une modification (ou adaptation) de SLA lorsque l'utilisateur souscrit à un service qui n'est pas compatible avec le SLA en cours. Par exemple, lorsqu'un utilisateur a souscrit une connexion Internet de type bronze et qu'il souhaite disposer d'un service de voix sur IP, ou de vidéo à la demande, ou d'une application telle que, notamment, des jeux en ligne (etc..), qui nécessite un service de type gold, sa connexion peut passer automatiquement du type bronze au type gold.

Mais, d'autres conditions ou critères de modification (ou d'adaptation) de SLA peuvent être envisagés. Ainsi, lorsqu'un client doit être privilégié, par exemple en vue d'un futur contrat, ou en vue d'éviter une perte de contrat, ou encore s'il doit être dédommagé en raison de pannes récentes, alors on peut augmenter la qualité de l'un au moins des paramètres de son SLA (par exemple la bande passante).

Chaque fois qu'une proposition d'adaptation de SLA est acceptée, les données auxiliaires qui définissent le SLA modifié sont stockées dans la première partie 3 de la base de données 4.

Lorsque la différence détectée ne peut pas être prise en compte par les offres de service de l'opérateur et/ou lorsque le nombre de différences détectées est supérieur au seuil, ou encore lorsque le module d'adaptation 10 constate que de nombreux SUPs associés à des clients différents présentent tous le même type de différence avec le(s) SLA(s) correspondant, ledit module d'adaptation 10 charge le premier sous-module 11 d'élaborer une proposition d'adaptation de l'une au moins des offres de service de l'opérateur.

Préférentiellement, cette proposition de modification d'offre de service s'effectue à partir d'une ou plusieurs propositions d'adaptation de SLA, fournie(s) par le premier sous-module 11, ainsi qu'éventuellement de données externes MD provenant, par exemple, d'études de marché. Par conséquent, le second sous-module 12 ne peut être sollicité par le module d'adaptation 10 qu'une fois que le premier sous-module 11 a été sollicité.

Afin d'élaborer ses propositions d'adaptation d'offre de service, le second sous-module 12 peut consulter les données définissant les offres de service actuelles et passées, stockées dans la troisième partie 13 de la base de données 4. Par ailleurs, chaque fois qu'une proposition d'adaptation d'offre de service est acceptée par l'opérateur, les données qui définissent l'offre de service modifiée sont stockées dans la troisième partie 13 de la base de données 4.

Le dispositif de traitement 2 peut fonctionner de façon automatisée ou à la requête de l'opérateur. Par ailleurs, les vérifications (ou déterminations) sont préférentiellement effectuées périodiquement. Par exemple, toutes les semaines le dispositif de traitement 2 est chargé de vérifier client après client si leurs SLAs respectifs satisfont réellement à leurs besoins. En variante, lorsque certains au moins des SLAs sont chacun associés à des groupes de clients, le dispositif de traitement 2 peut être chargé de vérifier toutes les semaines que chaque SLA satisfait aux besoins du groupe de clients auquel il est associé. Mais, l'opérateur peut également négocier avec chacun de ses clients une périodicité spécifique.

Les modules 5 à 7 et 9 à 12 qui constituent le dispositif de traitement 1 peuvent être respectivement réalisés sous la forme de circuits électroniques, de modules logiciels (ou informatiques), ou d'une combinaison de circuits et de logiciels.

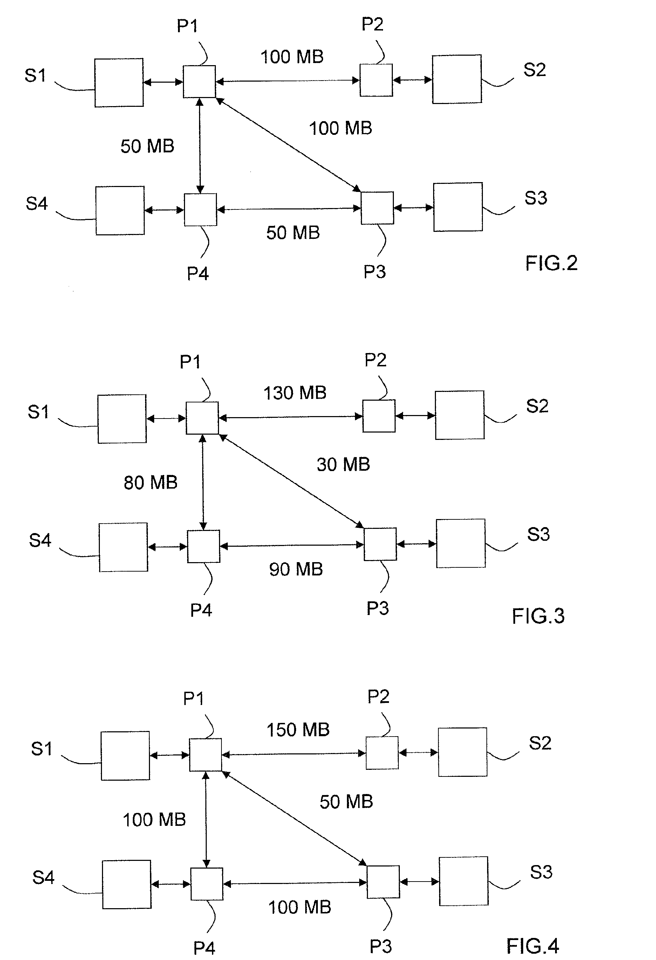

On se réfère maintenant aux figures 2 à 4 pour décrire un exemple illustratif de fonctionnement du dispositif de traitement 2.

On considère dans cet exemple qu'une entreprise cliente d'un opérateur dispose de quatre sites comportant chacun un serveur d'accès Sj (j = 1 à 4) raccordé à un serveur périphérique ou point de présence Pj. Ces points de présence Pj sont raccordés au réseau N, ici de type Internet, et sont configurés par l'opérateur du réseau de manière à constituer, pour la cliente, un réseau privé virtuel, de type IP-VPN (pour « Internet Protocol-Virtual Private Network »).

Comme cela est illustré sur la figure 2, la cliente a passé un accord de niveau de service (SLA) avec l'opérateur pour disposer d'un service IP-VPN entre ses quatre serveurs d'accès Sj. Plus précisément, selon le SLA, la première liaison entre les premier P1 et deuxième P2 points de présence doit posséder une bande passante de 100 mégabits (MB), la deuxième liaison entre les premier P1 et troisième P3 points de présence doit posséder une bande passante de 100 MB, la troisième liaison entre les premier P1 et quatrième P4 points de présence doit posséder une bande passante de 50 MB, et la quatrième liaison entre les troisième P3 et quatrième P4 points de présence doit posséder une bande passante de 50 MB.

Dans cet exemple, le module d'extraction 7, après avoir effectué l'analyse des mesures des paramètres du réseau N, concernant la cliente, délivre au module de comparaison 9 un profil d'utilisateur (ou SUP) schématiquement représenté sur la figure 3. Plus précisément, ce profil indique que la cliente a utilisée une bande passante de 130 MB sur la première liaison P1-P2, une bande passante de 30 MB sur la deuxième liaison P1-P3, une bande passante de 80 MB sur la troisième liaison P1-P4, et une bande passante de 90 MB sur la quatrième liaison P3-P4.

Le module de comparaison 9 extrait de la première partie 3 de la base de données 4 les données auxiliaires qui définissent le SLA de la cliente, puis les compare aux données primaires définissant le SUP déterminé par le module d'extraction 7. Il en déduit immédiatement que la cliente utilise plus de bande passante sur trois liaisons et moins de bande passante sur une liaison qu'elle n'y est autorisée par le SLA. Plus précisément, sur la liaison P1-P2 la cliente a utilisé une bande passante de 130 MB au lieu des 100 MB autorisés, sur la liaison P1-P3 la cliente a utilisé une bande passante de 30 MB au lieu des 100 MB autorisés, sur la liaison P1-P4 la cliente a utilisé une bande passante de 80 MB au lieu des 50 MB autorisés, et sur la liaison P3-P4 la cliente a utilisé une bande passante de 90 MB au lieu des 50 MB autorisés.

Le module de comparaison 9 signale ces différences au module d'adaptation 10, qui charge alors le premier sous-module 11 d'élaborer une adaptation du SLA de la cliente, compte tenu du SUP reçu qui définit ses besoins réels.

Le premier sous-module 11 examine alors les offres de service de l'opérateur, stockées dans la troisième partie 13 de la base de données 4, et constate qu'elles proposent des largeurs de bande passante de 50 MB, 100 MB et 150MB. Il constate alors qu'il est en mesure de faire une proposition d'adaptation du SLA de la cliente, qui respecte les offres de service de l'opérateur. Cette proposition est schématiquement représentée sur la figure 4. Elle consiste à proposer une bande passante de 150 MB sur la première liaison P1-P2, une bande passante de 50 MB sur la deuxième liaison P1-P3, une bande passante de 100 MB sur la troisième liaison P1-P4, et une bande passante de 100 MB sur la quatrième liaison P3-P4.

Dans cet exemple, il n'y a pas de raison de faire fonctionner le second sous-module 12, puisque la modification du SLA satisfait aux offres de service de l'opérateur. Par conséquent, le module d'adaptation 10 peut soit proposer à la cliente le SLA modifié, soit instaurer automatiquement ce SLA modifié, selon les accords passés entre l'opérateur et la cliente.

L'invention offre également un procédé de traitement de données de gestion d'un réseau de communications.

Celui-ci peut être mis en oeuvre à l'aide du dispositif de traitement 2 présenté ci-avant. Les fonctions et sous-fonctions principales et optionnelles assurées par les étapes de ce procédé étant sensiblement identiques à celles assurées par les différents moyens constituant le dispositif de traitement 2, seules seront résumées ci-après les étapes mettant en oeuvre les fonctions principales du procédé selon l'invention.

Ce procédé consiste à déterminer, à partir des données de gestion, des données primaires représentatives d'un état d'utilisation du réseau N par au moins un utilisateur ayant passé un SLA avec l'opérateur du réseau, puis à comparer cet état d'utilisation à des données auxiliaires représentatives du SLA, de manière à déterminer une action à entreprendre en cas de détection d'au moins une différence entre les données primaires et les données auxiliaires.

Grâce à l'invention, le gestionnaire du réseau peut disposer d'informations précises sur les réels besoins de ses clients, ce qui lui permet, d'une part, de mieux les satisfaire puisqu'ils ne paieront que les services qui correspondent à leurs besoins, et d'autre part, de mieux gérer le réseau, et notamment son trafic.

Par ailleurs, l'invention permet au gestionnaire du réseau d'adapter ses offres de service aux besoins réels de ses clients.

En outre, le dispositif selon l'invention peut donner une indication sur l'évolution future des offres de service et sur les ressources correspondantes à mettre en oeuvre, par exemple après une étude et une analyse de tendances.

L'invention ne se limite pas aux modes de réalisation de procédé et dispositif de traitement décrits ci-avant, seulement à titre d'exemple, mais elle englobe toutes les variantes que pourra envisager l'homme de l'art dans le cadre des revendications ci-après.

## Revendications

1. Dispositif (2) de traitement de données de gestion d'un réseau de communications (N), représentatives de l'utilisation des ressources et/ou des services au sein dudit réseau, **caractérisé en ce qu'**il comporte des moyens de traitement (5) agencés pour déterminer des données primaires représentatives d'un état d'utilisation du réseau (N) par au moins un utilisateur ayant passé un accord de niveau de service, dit « SLA », avec un opérateur dudit réseau, à partir desdites données de gestion, puis pour comparer ledit état d'utilisation à des données auxiliaires représentatives dudit SLA, de manière à déterminer une action à entreprendre en cas de détection d'au moins une différence entre lesdites données primaires et lesdites données auxiliaires, lesdits moyens de traitement (5) étant agencés pour déterminer ladite action à entreprendre parmi un groupe d'action comprenant une proposition de modification du SLA passé entre ledit utilisateur et ledit opérateur et/ou une proposition de modification des services et/ou des ressources dudit réseau (N), et pour adapter certaines au moins des propositions de modification de SLA en fonction de ladite différence détectée

2. Dispositif selon la revendication 1, **caractérisé en ce que** lesdites données primaires sont représentatives d'une utilisation d'au moins un service et/ou de ressource(s).

3. Dispositif selon l'une des revendications 1 et 2, **caractérisé en ce que** lesdits moyens de traitement (5) sont agencés pour adapter certaines au moins des propositions de modification des services et/ou des ressources dudit réseau en fonction d'au moins une proposition de modification de SLA.

4. Dispositif selon la revendication 3, **caractérisé en ce que** lesdits moyens de traitement (5) sont agencés pour adapter certaines au moins des propositions de modification des services et/ou des ressources dudit réseau en fonction de données tertiaires (MD).

5. Dispositif selon l'une des revendications précédentes, **caractérisé en ce que** lesdits moyens de traitement (5) sont agencés pour déterminer certains au moins des états d'utilisation sous forme d'un profil d'utilisation (SUP) dans un intervalle temporel choisi, à partir des données de gestion correspondant audit intervalle temporel.

6. Dispositif selon l'une des revendications précédentes, **caractérisé en ce que** lesdits moyens de traitement (5) sont agencés pour déterminer une action à entreprendre à partir de plusieurs états d'utilisation associés à des utilisateurs différents ou d'un état d'utilisation associé à un groupe d'utilisateurs.

7. Dispositif selon l'une des revendications précédentes, **caractérisé en ce que** lesdits moyens de traitement (5) sont agencés pour instaurer automatiquement une modification de SLA lorsqu'au moins une condition est satisfaite.

8. Dispositif selon la revendication 7, **caractérisé en ce que** lesdits moyens de traitement (5) sont agencés pour instaurer automatiquement ladite modification de SLA lorsqu'elle est associée à une augmentation du tarif de l'utilisateur inférieure à une pénalité représentative de la violation du SLA par l'utilisateur.

9. Dispositif selon l'une des revendications précédentes, **caractérisé en ce que** lesdits moyens de traitement (5) sont agencés pour effectuer leurs déterminations de façon périodique.

10. Dispositif (1) de gestion d'un réseau de communications (N), **caractérisé en ce qu'**il comprend un dispositif de traitement (2) selon l'une des revendications précédentes.

11. Procédé de traitement de données de gestion d'un réseau de communications (N), représentatives de l'utilisation des ressources et/ou des services au sein dudit réseau, **caractérisé en ce qu'**il consiste à déterminer des données primaires représentatives d'un état d'utilisation du réseau (N) par au moins un utilisateur ayant passé un accord de niveau de service, dit « SLA », avec un opérateur dudit réseau, à partir desdites données de gestion, puis comparer ledit état d'utilisation à des données auxiliaires représentatives dudit SLA, de manière à déterminer une action à entreprendre en cas de détection d'au moins une différence entre lesdites données primaires et lesdites données auxiliaires, ladite action à entreprendre est déterminée dans un groupe d'action comprenant une proposition de modification du SLA passé entre ledit utilisateur et ledit opérateur et/ou une proposition de modification des services et/ou des ressources dudit réseau (N), certaines au moins des propositions de modification de SLA sont adaptées en fonction de ladite différence détectée.

12. Procédé selon la revendication 11, **caractérisé en ce que** lesdites données primaires sont représentatives d'une utilisation d'au moins un service et/ou de ressource(s).

13. Procédé selon l'une des revendications 11 et 12, **caractérisé en ce que** certaines au moins des propositions de modification des services et/ou des ressources dudit réseau (N) sont adaptées en fonction d'au moins une proposition de modification du SLA.

14. Procédé selon la revendication 13, **caractérisé en ce que** certaines au moins des propositions de modification des services et/ou des ressources dudit réseau sont adaptées en fonction de données tertiaires (MD).

15. Procédé selon l'une des revendications 11 à 14, **caractérisé en ce que** l'on détermine certains au moins des états d'utilisation sous forme d'un profil d'utilisation (SUP) dans un intervalle temporel choisi, à partir des données de gestion correspondant audit intervalle temporel.

16. Procédé selon l'une des revendications 11 à 15, **caractérisé en ce que** l'on détermine certaines actions à entreprendre à partir de plusieurs états d'utilisation associés à des utilisateurs différents ou d'un état d'utilisation associé à un groupe d'utilisateurs.

17. Procédé selon l'une des revendications 11 à 16, **caractérisé en ce que** l'on instaure automatiquement une modification de SLA lorsqu'au moins une condition est satisfaite.

18. Procédé selon la revendication 17, **caractérisé en ce que** l'on instaure automatiquement ladite modification de SLA lorsqu'elle est associée à une augmentation du tarif de l'utilisateur inférieure à une pénalité représentative de la violation du SLA par l'utilisateur.

19. Procédé selon l'une des revendications 11 à 18, **caractérisé en ce que** l'on effectue les déterminations de façon périodique.

20. Utilisation des procédé, dispositif de traitement (2) et dispositif de gestion (1) selon l'une des revendications précédentes dans des réseaux choisis dans un groupe comprenant les réseaux Internet (IP), ATM, Frame Relay, SDH et WDM.
